(19) Europäisches Patentamt / European Patent Office / Office européen des brevets

(11) **EP 3 649 160 B1**

(12) **FASCICULE DE BREVET EUROPEEN**

(45) Date de publication et mention de la délivrance du brevet:
**25.08.2021 Bulletin 2021/34**

(21) Numéro de dépôt: **18752556.3**

(22) Date de dépôt: **05.07.2018**

(51) Int Cl.:
***C08F 4/70*** *(2006.01)* ***B01J 31/02*** *(2006.01)*
***C07F 15/02*** *(2006.01)* ***C08K 3/10*** *(2018.01)*
***C08G 77/12*** *(2006.01)* ***C08G 77/20*** *(2006.01)*
***C08L 83/04*** *(2006.01)*

(86) Numéro de dépôt international:
**PCT/FR2018/051677**

(87) Numéro de publication internationale:
**WO 2019/008279 (10.01.2019 Gazette 2019/02)**

# (54) COMPOSE DU FER UTILE COMME CATALYSEUR D'HYDROSILYLATION, DE SILYLATION DÉSHYDROGENANTE ET DE RÉTICULATION DE COMPOSITIONS SILICONES

EISENVERBINDUNGEN UND DEREN VERWENDUNG ZUR HYDROSILYLIERUNGKALALYSATOR, DEHYDROGENATIVEN SILYLIERUNG UND VERNETZUNGSMITTEL

IRON COMPOUND USED AS HYDROSILYLATION CATALYST, AS DEHYDROGENATIVE SILYLATION CATALYST AND AS RETICULATING AGENT IN SILICONE COMPOSTIONS.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.07.2017 FR 1756323**

(43) Date de publication de la demande:
**13.05.2020 Bulletin 2020/20**

(73) Titulaires:
- **Elkem Silicones France S.A.S.**
  **69003 Lyon (FR)**
- **Université Claude Bernard Lyon 1**
  **69622 Villeurbanne (FR)**
- **Centre National de la Recherche Scientifique - CNRS**
  **75016 Paris (FR)**

(72) Inventeurs:
- **MONTEIL, Vincent**
  **69008 Lyon (FR)**
- **RAYNAUD, Jean**
  **69100 Villeurbanne (FR)**
- **PUILLET, Magali**
  **69008 Lyon (FR)**
- **BOUSQUIE, Magali**
  **69008 Lyon (FR)**

(74) Mandataire: **Plasseraud IP**
**66, rue de la Chaussée d'Antin**
**75440 Paris Cedex 09 (FR)**

(56) Documents cités:
**WO-A1-2012/017138 US-A1- 2014 249 311**

- **A. M. TONDREAU ET AL: "Iron Catalysts for Selective Anti-Markovnikov Alkene Hydrosilylation Using Tertiary Silanes", SCIENCE, vol. 335, no. 6068, 2 février 2012 (2012-02-02), pages 567-570, XP055137826, ISSN: 0036-8075, DOI: 10.1126/science.1214451**
- **JIAN YANG, T. DON TILLEY: "Efficient Hydrosilylation of Carbonyl Compounds with the Simple Amide Catalyst [Fe{N(SiMe3)2}2]", ANGEW. CHEM. INT. ED., vol. 49, 14 octobre 2010 (2010-10-14), pages 10186-10188, XP002778823, DOI: 10.1002/anie.201005055**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 649 160 B1

## Description

### DOMAINE DE L'INVENTION

Le domaine de l'invention est celui des réactions entre un composé insaturé et un composé comprenant au moins un atome d'hydrogène lié à un atome de silicium. Il peut s'agir des réactions d'hydrosilylation également appelées polyadditions et/ou des réactions de silylation déshydrogénante. L'invention concerne l'utilisation d'un nouveau type de catalyseurs pour ces réactions. Plus spécifiquement, la présente invention concerne l'utilisation de composés du fer comme catalyseurs d'hydrosilylation et/ou de silylation déshydrogénante. Ces catalyseurs permettent également le durcissement par réticulation de compositions silicones.

### ARRIERE-PLAN TECHNOLOGIQUE

Lors d'une réaction d'hydrosilylation (également appelée polyaddition), un composé comprenant au moins une insaturation réagit avec un composé comprenant au moins une fonction hydrogénosilyle, c'est-à-dire un atome d'hydrogène lié à un atome de silicium. Cette réaction peut par exemple être décrite dans le cas d'une insaturation de type alcène par :

(1) 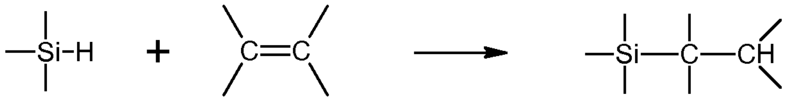

ou dans le cas d'une insaturation de type alcyne par :

(2) 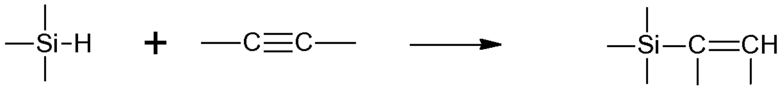

Lors d'une réaction de silylation déshydrogénante, la réaction peut être décrite par :

(3) 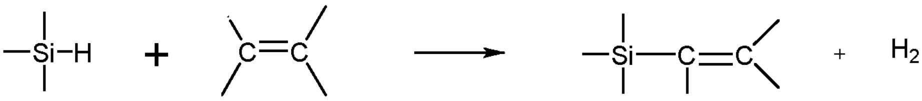

La réaction d'hydrosilylation est notamment utilisée pour réticuler des compositions silicones comprenant des organopolysiloxanes portant des motifs alcényle ou alcynyle et des organopolysiloxanes comprenant des fonctions hydrogénosilyle.

L'hydrosilylation de composés insaturés est réalisée par catalyse. Typiquement, le catalyseur approprié pour cette réaction est un catalyseur au platine. Actuellement, la plupart des réactions industrielles d'hydrosilylation sont catalysées par le complexe de platine de Karstedt, de formule générale $Pt_2$(divinyltétraméthyldisiloxane)$_3$ (ou en abrégé $Pt_2(DVTMS)_3$) :

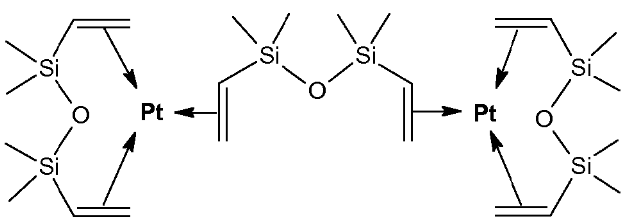

Au début des années 2000, la préparation de complexes de platine - carbène de formule générale :

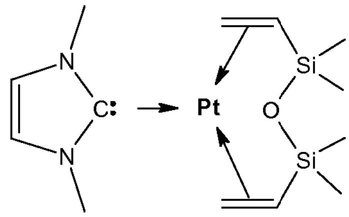

a permis d'avoir accès à des catalyseurs plus stables (voir par exemple la demande internationale de brevet WO 01/42258).

La demande de brevet WO2012/017138 A décrit des catalyseurs à base de fer capables d'effectuer des réactions d'hydrosilylation de compositions comprenant un organopolysiloxane ayant au moins deux groupes alcényles par molécule et une huile silicone ou un composé silane comprenant au moins deux groupes hydrosilyles SiH. Les catalyseurs d'hydrosilylation sont des complexes du fer de formule générale $FeL_1L_2$ où $L_1$ et $L_2$ sont des groupes cyclopentadiényles substitués ou non par des groupes acétylacétonate.

Des composés du fer utilisés pour l'hydrosilylation d'alcènes avec des silanes tertiaires sont également décrit par M. Tondreau et Al. ("Iron Catalysts for Selective Anti-Markovnikov Alkene Hydrosilylation Using Tertiary Silanes", SCIENCE, vol. 335, no. 6068, 2 février 2012, pages 567-570). Ces composés du fer sont des complexes bis(imino)pyridine de fer.

L'utilisation d'un composé à base de fer de formule générale $[Fe\{N(SiR_3)_2\}_2]$ en tant que catalyseur d'hydrosilylation a également été décrite par Jian Yang ("Efficient Hydrosilylation of Carbonyl Compounds with the Simple Amide Catalyst [Fe(N(SiMe3)2}2]", ANGEW. CHEM. INT. ED., vol. 49, 14 octobre 2010, pages 10186-10188). Toutefois, ces composés du fer sont uniquement décrits en tant que catalyseur d'hydrosilylation de composés comportant une fonction carbonyle en présence de composés comprenant une fonction hydrosilyle Si-H tel que le trihydrure phényle silane.

Toutefois, l'utilisation de catalyseurs au platine est toujours problématique. Il s'agit d'un métal cher, en voie de raréfaction et dont le coût fluctue énormément. Son utilisation à l'échelle industrielle est difficile. Il serait donc avantageux de disposer d'une alternative à la réaction d'hydrosilylation catalysée par du platine. Il serait tout particulièrement intéressant de proposer un nouveau type de catalyseur pour les réactions d'hydrosilylation ne contenant pas de platine.

Il serait donc intéressant de proposer des catalyseurs alternatifs aux catalyseurs à base de platine et de disposer de nouvelles compositions silicones réticulables et/ou durcissables au moyen de catalyseurs ne présentant plus les problèmes décrits ci-dessus.

L'utilisation d'autres catalyseurs a été proposée par le passé, par exemple l'utilisation de rhodium ou d'iridium. Toutefois, ces métaux sont tout aussi rares que le platine, et leur utilisation ne résout pas les problèmes mentionnés.

La demande de brevet US20140249311 A1 divulgue l'utilisation de produits à base de fer comme catalyseur d'hydrosilylation. Ces produits à base de fer sont issus d'une réaction entre un précurseur de fer, qui peut être $Fe(N(SiMe_3)_2)_2$, et un ligand. Ces produits sont ensuite traités avec un réducteur avant d'être utilisés comme catalyseurs. Un grand nombre de ces produits à base de fer a été testé comme catalyseur d'hydrosilylation mais seuls certains d'entre eux sont actifs. De plus, aucune mention n'est faite de l'activité du catalyseur ou de la sélectivité de la réaction.

Un des objectifs de la présente invention est donc de proposer un procédé d'hydrosilylation et/ou de silylation déshydrogénante entre un composé comprenant au moins un atome d'hydrogène lié à un atome de silicium et un composé insaturé, en particulier un organopolysiloxane portant un motif alcényle ou alcynyle, qui utiliserait un catalyseur avantageusement peu coûteux, d'approvisionnement facile, et peu ou pas toxique. En outre, on souhaite que les rendements d'hydrosilylation obtenus avec ce catalyseur alternatif soient les plus élevés possibles. Dans ce contexte, un des objectifs de la présente invention est de proposer un nouveau catalyseur, adapté notamment à la catalyse des réactions d'hydrosilylation et de silylation déshydrogénante, avec une activité suffisante pour une mise en œuvre industrielle

Cet objectif est atteint à l'aide d'un catalyseur qui est un composé du fer présentant une structure spécifique.

## BREVE DESCRIPTION DE L'INVENTION

Ces objectifs ont été atteints grâce à la mise en œuvre d'un composé du fer comme catalyseur d'hydrosilylation et/ou silylation déshydrogénante.

La présente invention a pour premier objet l'utilisation en tant que catalyseur d'hydrosilylation et/ou de silylation déshydrogénante d'un composé du fer de formule (1)

$$[Fe(N(SiR_3)_2)_x]_y \qquad (1)$$

dans laquelle :

- les symboles R, identiques ou différents, représentent un atome d'hydrogène ou un radical hydrocarboné ayant de 1 à 12 atomes de carbone, et de préférence les symboles R, identiques ou différents, sont choisis dans le groupe constitué par : l'atome d'hydrogène, les groupes alkyles ayant de 1 à 8 atomes de carbone et les groupes aryles ayant de 6 à 12 atomes de carbone,
- x=1, 2 ou 3 et
- y=1 ou 2.

En outre, l'invention a également pour objet un procédé pour préparer des produits d'hydrosilylation et/ou de silylation déshydrogénante par réaction entre un composé insaturé choisi parmi les composés organopolysiloxanes comprenant au moins une fonction alcène et/ou au moins une fonction alcyne, avec un composé comprenant au moins une fonction hydrogénosilyle, ledit procédé étant caractérisé par le fait qu'il est catalysé par un composé du fer de formule (1) tel que décrit ci-dessus.
Un autre objet de l'invention est une composition comprenant :

- au moins un composé insaturé choisi parmi les composés organopolysiloxanes comprenant au moins une fonction alcène et/ou au moins une fonction alcyne,
- au moins un composé comprenant au moins une fonction hydrogénosilyle, et
- un composé du fer de formule (1) tel que décrit ci-dessus.

## DESCRIPTION DETAILLEE DE L'INVENTION

### Procédé

La présente invention a donc pour objet un procédé pour préparer des produits d'hydrosilylation et/ou de silylation déshydrogénante par réaction

- entre un composé insaturé A choisi parmi les composés organopolysiloxanes comportant des motifs de formule (I) :

$$Z_gU_hSiO_{(4-(g+h))/2} \qquad (I)$$

dans laquelle :

  - les radicaux Z, identiques ou différents, représentent un radical alcényle ou alcynyle, linéaire ou ramifié, ayant de 2 à 6 atomes de carbone ;
  - les radicaux U, identiques ou différents, représentent un radical hydrocarboné ayant de 1 à 12 atomes de carbone,
  - g = 1 ou2,h=0, 1 ou 2 et g+h =1, 2 ou 3;

et comportant éventuellement d'autres motifs de formule (II) :

$$U_iSiO_{(4-i)/2} \qquad (II)$$

dans laquelle U a la même signification que ci-dessus, et i =0,1, 2, ou 3 ;
- et un composé **B** comprenant au moins une fonction hydrogénosilyle, ledit procédé étant caractérisé par le fait qu'il est catalysé par un composé du fer **C** de formule (1) :

$$[Fe(N(SiR_3)_2)_x]_y \qquad (1)$$

dans laquelle :

  - les symboles R, identiques ou différents, représentent un atome d'hydrogène ou un radical hydrocarboné ayant de 1 à 12 atomes de carbone, et de préférence les symboles R, identiques ou différents, sont choisis dans le groupe constitué par : l'atome d'hydrogène, les groupes alkyles ayant de 1 à 8 atomes de carbone, les groupes cycloalkyles ayant de 3 à 8 atomes de carbone et les groupes aryles ayant de 6 à 12 atomes de carbone,
  - x=1, 2 ou 3 et
  - y=1 ou 2.

Dans cette formule (1) le fer peut être au degré d'oxydation I, II ou III.

Il est du mérite des inventeurs d'avoir mis en évidence que les composés C de formule (1) tels que décrits ci-dessus pouvaient catalyser efficacement des réactions d'hydrosilylation et ou de silylation déshydrogénante.

Ces catalyseurs, en particulier, présentent l'avantage de ne pas nécessiter l'emploi de solvants car ils présentent une bonne solubilité dans les huiles silicones.

Selon un mode de réalisation de l'invention, dans le procédé selon l'invention le composé C est un composé de formule (2):

$$[Fe(N(SiR_3)_2)_2]_y \qquad (2)$$

dans laquelle :

- Fe représente le fer au degré d'oxydation II et
- R est tel que défini ci-dessus et
- y=1 ou 2.

Selon un mode préféré de réalisation de l'invention, dans le procédé selon l'invention le catalyseur **C** est un composé de formule (3):

$$[Fe(N(Si(CH_3)_3)_2)_2]_y \qquad (3)$$

dans laquelle :

- Fe représente le fer au degré d'oxydation II et
- y=1 ou 2.

Selon une variante, le composé C de formule (3) ci-dessus peut être synthétisé in-situ, en présence du composé insaturé **A,** par réaction quantitative entre $FeC1_2$ et $LiN(SiMe_3)_2$.

Le composé insaturé **A** est choisi parmi les composés organopolysiloxanes comportant des motifs de formule (I) :

$$Z_gU_hSiO_{(4-(g+h))/2} \qquad (I)$$

dans laquelle :

- les radicaux Z, identiques ou différents, représentent un radical alcényle ou alcynyle, linéaire ou ramifié, ayant de 2 à 6 atomes de carbone ;
- les radicaux U, identiques ou différents, représentent un radical hydrocarboné ayant de 1 à 12 atomes de carbone,
- g = 1 ou 2, h = 0, 1 ou 2 et g+h =1, 2 ou 3 ;

et comportant éventuellement d'autres motifs de formule (II) :

$$U_iSiO_{(4-i)/2} \qquad (II)$$

dans laquelle U a la même signification que ci-dessus, et i =0,1, 2, ou 3.

Il est entendu dans la formule (I) et dans la formule (II) ci-dessus que, si plusieurs groupes U sont présents, ils peuvent être identiques ou différents les uns des autres. Dans la formule (I), le symbole g peut préférentiellement être égal à 1.

Dans la formule (I) et dans la formule (II), U peut représenter un radical monovalent choisi dans le groupe constitué par les groupes alkyles ayant 1 à 8 atomes de carbone, éventuellement substitué par au moins un atome d'halogène tel que le chlore ou le fluor, les groupes cycloalkyles ayant de 3 à 8 atomes de carbone et les groupes aryles ayant de 6 à 12 atomes de carbone. U peut avantageusement être choisi dans le groupe constitué par le méthyle, l'éthyle, le propyle, le 3,3,3-trifluoropropyle, le xylyle, le tolyle et le phényle.

Lesdits organopolysiloxanes peuvent être des huiles de viscosité dynamique de l'ordre de 0,1 à 100000 mPa.s à 25°C, généralement de l'ordre de 1 à 70000 mPa.s à 25°C, ou des gommes de viscosité dynamique de l'ordre de 1 000 000 mPa.s ou plus à 25°C.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité

mesurée soit indépendante du gradient de vitesse.

Ces organopolysiloxanes peuvent présenter une structure linéaire, ramifiée ou cyclique. Leur degré de polymérisation est, de préférence, compris entre 2 et 5000.

Lorsqu'il s'agit de polymères linéaires, ceux-ci sont essentiellement constitués de motifs siloxyles « D » choisis parmi le groupe constitué par les motifs siloxyles $Z_2SiO_{2/2}$, $ZUSiO_{2/2}$ et $U_2SiO_{2/2,}$ et de motifs siloxyles « M » choisis parmi le groupe constitué par les motifs siloxyles $U_3SiO_{1/2,}$ $ZU_2SiO_{1/2,}$ $Z_2USiO_{1/2}$ et $Z_3SiO_{1/2.}$ Les symboles Z et U sont tels que décrits ci-dessus.

A titre d'exemples de motifs « M » terminaux, on peut citer les groupes triméthylsiloxy, diméthylphénylsiloxy, diméthylvinylsiloxy ou diméthylhexènylsiloxy.

A titre d'exemples de motifs « D », on peut citer les groupes diméthylsiloxy, méthylphénylsiloxy, méthylvinylsiloxy, méthylbutènylsiloxy, méthylhexènylsiloxy, méthyldécènylsiloxy ou méthyldécadiènylsiloxy.

Des exemples d'organopolysiloxanes linéaires pouvant être des composés insaturés A selon l'invention sont :

- un poly(diméthylsiloxane) à extrémités diméthylvinylsilyles ;
- un poly(diméthylsiloxane-co-méthylphénylsiloxane) à extrémités diméthylvinylsilyles ;
- un poly(diméthylsiloxane-co-méthylvinylsiloxane) à extrémités diméthylvinylsilyles ; et
- un poly(diméthylsiloxane-co-méthylvinylsiloxane) à extrémités triméthyl-silyles ; et

un poly(méthylvinylsiloxane) cycliques.

Les organopolysiloxanes cycliques pouvant être également des composés insaturés A selon l'invention sont par exemple, ceux constitués de motifs siloxyles «D» de formules suivantes : $Z_2SiO_{2/2}$, $U_2SiO_{2/2}$ ou $ZUSiO_{2/2}$, qui peuvent être du type dialkylsiloxy, alkylarylsiloxy, alkylvinylsiloxy, alkylsiloxy. Lesdits organopolysiloxanes cycliques présentent une viscosité de l'ordre de 10 à 5000 mPa.s à 25°C.

Selon un mode préféré de réalisation, on peut mettre en œuvre dans le procédé selon l'invention un second composé organopolysiloxane comportant, par molécule, au moins deux radicaux alcényles en $C_2$-$C_6$ liés à des atomes de silicium, différent du composé organopolysiloxane A, ledit second composé organopolysiloxane étant de préférence le divinyltétraméthylsiloxane (DVTMS).

De préférence, le composé organopolysiloxane A a une teneur massique en motif Sivinyle comprise entre 0,001 et 30%, de préférence entre 0,01 et 10%.

Comme autres exemples de composés insaturés A on peut citer les résines silicones comprenant au moins un radical vinyle. Par exemple elles peuvent être choisies parmi le groupe constitué par les résines silicones suivantes :

- $MD^{Vi}Q$ où les groupes vinyles sont inclus dans les motifs D,
- $MD^{Vi}TQ$ où les groupes vinyles sont inclus dans les motifs D,
- $MM^{Vi}Q$ où les groupes vinyles sont inclus dans une partie des motifs M,
- $MM^{Vi}TQ$ où les groupes vinyles sont inclus dans une partie des motifs M,
- $MM^{Vi}DD^{Vi}Q$ où les groupes vinyles sont inclus dans une partie des motifs M et D,
- et leurs mélanges, avec :

  - $M^{Vi}$ = motif siloxyle de formule $(R)_2(vinyle)SiO_{1/2}$
  - $D^{Vi}$ = motif siloxyle de formule $(R)(vinyle)SiO_{2/2}$
  - T = motif siloxyle de formule $(R)SiO>_{3/2}$
  - Q = motif siloxyle de formule $SiO_{4/2}$
  - M = motif siloxyle de formule $(R)_3SiO_{1/2}$
  - D = motif siloxyle de formule $(R)_2SiO_{2/2}$

  et les groupements R, identiques ou différents, sont des groupes hydrocarbonés monovalents choisis parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle. De préférence, les groupements R sont des méthyles.

Le procédé selon l'invention met également en œuvre un composé **B** comprenant au moins une fonction hydrogénosilyle.

De préférence, le composé **B** comprenant au moins une fonction hydrogénosilyle est choisi parmi le groupe constitué par:

- un composé silane ou polysilane comprenant au moins un atome d'hydrogène lié à un atome de silicium,
- un composé organopolysiloxane comprenant au moins un atome d'hydrogène lié à un atome de silicium, de préférence un composé organopolysiloxane comprenant par molécule au moins deux fonctions hydrogénosilyles, et

- un polymère organique comprenant des fonctions hydrogénosilyles en positions terminales.

Par composé « silane », on entend dans la présente invention les composés chimiques comprenant un atome de silicium lié à quatre atomes d'hydrogènes ou à des substituants organiques. Par composé « polysilane », on entend dans la présente invention les composés chimiques possédant au moins un motif =Si-Si=.

Parmi les composés silanes comprenant au moins un atome d'hydrogène lié à un atome de silicium nous pouvons citer le phénylsilane et le triethoxysilane.

Le composé **B** peut également être un composé organopolysiloxane comprenant au moins un atome d'hydrogène lié à un atome de silicium. Par composé « organopolysiloxane », on entend dans la présente invention les composés chimiques possédant au moins un motif ≡Si-O-Si≡. Le composé organopolysiloxane comprend au moins deux atomes de silicium, de préférence au moins 3 atomes de silicium ou plus.

Ledit composé **B** peut avantageusement être un organopolysiloxane comprenant au moins un motif de formule (III) :

$$H_dU_eSiO_{(4-(d+e))/2} \qquad (III)$$

dans laquelle :

- les radicaux U, identiques ou différents, représentent un radical hydrocarboné ayant de 1 à 12 atomes de carbone,
- d =1 ou 2, e =0, 1 ou 2 et d+e =1, 2 ou 3 ;

et éventuellement d'autres motifs de formule (IV) :

$$U_fSiO_{(4-f)/2} \qquad (IV)$$

dans laquelle U a la même signification que ci-dessus, et f =0,1, 2, ou 3.

Il est entendu dans la formule (III) et dans la formule (IV) ci-dessus que, si plusieurs groupes U sont présents, ils peuvent être identiques ou différents les uns des autres. Dans la formule (III), le symbole d peut préférentiellement être égal à 1. De plus, dans la formule (III) et dans la formule (IV), U peut représenter un radical monovalent choisi dans le groupe constitué par un groupe alkyle ayant 1 à 8 atomes de carbone, éventuellement substitué par au moins un atome d'halogène tel que le chlore ou le fluor, les groupes alkyles ayant de 1 à 8 atomes de carbone, les groupes cycloalkyles ayant de 3 à 8 atomes de carbone et les groupes aryles ayant de 6 à 12 atomes de carbone. U peut avantageusement être choisi dans le groupe constitué par le méthyle, l'éthyle, le propyle, le 3,3,3-trifluoropropyle, le xylyle, le tolyle et le phényle.

Ces organopolysiloxanes peuvent présenter une structure linéaire, ramifiée, ou cyclique. Le degré de polymérisation est de préférence supérieur ou égal à 2. Plus généralement, il est inférieur à 5000.

Lorsqu'il s'agit de polymères linéaires, ceux-ci sont essentiellement constitués :

- de motifs siloxyles « D » choisis parmi les motifs de formules suivantes ou $UHSiO_{2/2}$, et
- de motifs siloxyles « M » choisis parmi les motifs de formules suivantes $U_3SiO_{1/2}$ ou $U_2HSiO_{1/2}$.

Ces organopolysiloxanes linéaires peuvent être des huiles de viscosité dynamique de l'ordre de 1 à 100 000 mPa.s à 25°C et plus généralement de l'ordre de 10 à 5000 mPa.s à 25°C.

Des exemples d'organopolysiloxanes pouvant être des composés **B** selon l'invention comprenant au moins un atome d'hydrogène lié à un atome de silicium sont :

- un poly(diméthylsiloxane) à extrémités hydrogénodiméthylsilyles;
- un poly(diméthylsiloxane-co-méthylhydrogénosiloxane) à extrémités triméthyl-silyles;
- un poly(diméthylsiloxane-co-méthylhydrogénosiloxane) à extrémités hydrogénodiméthylsilyles ;
- un poly(méthylhydrogénosiloxane) à extrémités triméthylsilyles ; et
- un poly(méthylhydrogénosiloxane) cycliques.

Lorsqu'il s'agit d'organopolysiloxanes cycliques, ceux-ci sont constitués de motifs siloxyles « D » de formules suivantes et $UHSiO_{2/2}$, qui peuvent être du type dialkylsiloxy ou alkylarylsiloxy ou de motifs $UHSiO_{2/2}$ uniquement. Ils présentent alors une viscosité de l'ordre de 1 à 5000 mPa.s.

De préférence, le composé **B** est un composé organopolysiloxane comprenant par molécule au moins deux et de préférence trois fonctions hydrogénosilyles (Si-H).

Conviennent particulièrement à l'invention à titre de composé organohydrogénopolysiloxane **B** les composés suivants :

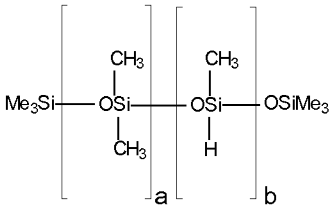

S1

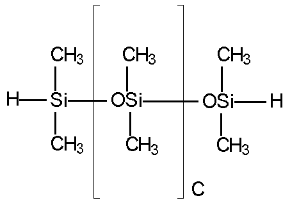

S2

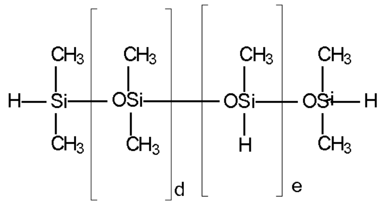

S3

avec a, b, c, d et e définis ci-dessous :

- dans le polymère de formule S1 :
- $0 \leq a \leq 150$, de préférence $0 \leq a \leq 100$, et plus particulièrement $0 \leq a \leq 20$, et
- $1 \leq b \leq 90$ de préférence $10 \leq b \leq 80$ et plus particulièrement $30 \leq b \leq 70$,
- dans le polymère de formule S2 : $0 \leq c \leq 15$
- dans le polymère de formule S3 : $5 \leq d \leq 200$, de préférence $20 \leq d \leq 100$, et $2 \leq e \leq 90$, de préférence $10 \leq e \leq 70$.

En particulier, un composé organohydrogénopolysiloxane **B** convenant à l'invention est le composé de formule S1, où a=0.

De préférence le composé organohydrogénopolysiloxane **B** a une teneur massique en motif SiH comprise entre 0,2 et 91%, de préférence entre 0,2 et 50%.

Enfin, le composé **B** peut être un polymère organique comprenant des fonctions hydrogénosilyles en positions terminales. Le polymère organique peut par exemple être un polyoxoalkylène, un polymère hydrocarboné saturé ou un poly(méth)acrylate. Des polymères organiques comprenant des fonctions réactives en positions terminales sont notamment décrits dans les demandes de brevet US 2009/0182099 et US 2009/0182091.

Selon un mode de réalisation particulier de la présente invention, il est possible que le composé insaturé **A** et le composé **B** comprenant au moins une fonction hydrogénosilyle soient un seul et même composé, comprenant d'une part au moins une fonction alcène et/ou une fonction alcyne, et d'autre part au moins un atome d'hydrogène lié à un atome de silicium. Ce composé peut alors être qualifié de « bifonctionnel », et il est susceptible de réagir sur lui-même par réaction d'hydrosilylation. L'invention peut donc aussi concerner un procédé d'hydrosilylation d'un composé bifonctionnel avec lui-même, ledit composé bifonctionnel comprenant d'une part au moins une fonction alcène et/ou une fonction alcyne, et d'autre part au moins un atome de silicium et au moins un atome d'hydrogène lié à l'atome de silicium, ledit procédé étant caractérisé par le fait qu'il est catalysé par un composé C tel que décrit ci-dessus.

Des exemples d'organopolysiloxanes pouvant être des composés bifonctionnels sont

- un poly(diméthylsiloxane-co-hydrogénométhylsiloxane-co-vinylméthyl-siloxanes) à extrémités diméthylvinylsilyles;
- un poly(diméthylsiloxane-co-hydrogénométhylsiloxane-co-vinylméthyl-siloxanes) à extrémités diméthylhydrogénosilyles.

Lorsqu'il est question de la mise en œuvre du composé insaturé **A** et du composé **B** comprenant au moins une fonction hydrogénosilyle, l'homme du métier comprend qu'on entend également la mise en œuvre d'un composé bifonctionnel.

Dans le procédé selon l'invention on peut mettre en œuvre des agents réducteurs autres que le composé **B** comprenant au moins une fonction hydrogénosilyle. Comme exemple d'agents réducteurs on peut citer les hydrures métalliques comme $LiAlH_4$, les borohydrures métalliques comme $NaEt_3BH$ ou le $LiEt_3BH$ ou le $NaBH_4$. Ces agents réducteurs sont bien connus de l'homme de l'art. Sous une autre variante, le procédé selon l'invention peut mettre en œuvre un activateur ionique dérivé du bore comme par exemple les boranes ou les borates.

De préférence, le procédé selon l'invention ne met pas en œuvre d'agents réducteurs ou d'activateurs ioniques.

Le procédé selon l'invention peut être mis en œuvre en présence ou en absence de solvant. Selon un mode préféré de réalisation, le procédé selon l'invention est mis en œuvre en l'absence de solvant. Selon une variante de l'invention, un des réactifs, par exemple le composé insaturé **A,** peut jouer le rôle de solvant.

Le procédé selon l'invention peut être mis en œuvre à une température comprise entre 15°C et 150°C, préférentiellement entre 20°C et 130°C, plus préférentiellement encore entre 40°C et 110°C. L'Homme de l'Art saura adapter la température de réaction en fonction des composés **A** et **B** mis en œuvre dans le procédé selon l'invention.

Avantageusement, le procédé de l'invention est mis en œuvre sous atmosphère inerte.

Dans le procédé selon l'invention, la quantité relative de composé **A** et de composé **B** peut être contrôlée de façon à assurer le taux de réaction des insaturations avec des fonctions hydrogénosilyles souhaité. Le rapport molaire **R** des fonctions hydrogénosilyles des composés **B** sur les fonctions alcènes et alcynes des composés **A** est compris entre 1:10 et 10:1, de façon préférée entre 1:5 et 5:1, par exemple entre 1:3 et 3:1.

Selon un mode de réalisation du procédé selon l'invention, le rapport molaire **R** des fonctions hydrogénosilyles des composés **B** sur les fonctions alcènes et alcynes des composés **A** est strictement supérieur à 1. Les fonctions hydrogénosilyles sont alors en excès par rapport aux fonctions insaturées. Dans ce cas, le procédé d'hydrosilylation est alors qualifié de partiel. On peut également parler de fonctionnalisation partielle. La fonctionnalisation partielle peut être utilisée par exemple pour obtenir des huiles silicones avec des fonctions hydrogénosilyles et des fonctions époxy.

Selon un autre mode de réalisation, le rapport molaire des fonctions hydrogénosilyles des composés **B** sur les fonctions alcènes et alcynes des composés **A** est inférieur ou égal à 1. Les fonctions hydrogénosilyles sont alors en défaut par rapport aux fonctions insaturées.

Avantageusement, dans le procédé selon l'invention, la concentration molaire en composé C est de 0,01% à 15%, de préférence de 0,05% à 10%, par exemple de 0,1% à 4% par rapport au nombre de moles total d'insaturations portées par le composé insaturé **A.**

Selon une autre variante, la quantité de fer mise en œuvre dans le procédé selon l'invention est comprise entre 10 et 3000 ppm massiques du milieu réactionnel, de préférence entre 20 et 2000 ppm, par exemple entre 20 et 1000 ppm. Par milieu réactionnel on entend ici la somme des composés **A, B** et **C,** sans tenir compte de la présence éventuelle de solvant.

Selon une variante préférée, dans le procédé selon l'invention, on ne met pas en œuvre de composés à base de platine, palladium, ruthénium ou rhodium. La quantité de composés à base de platine, palladium, ruthénium ou rhodium dans le milieu réactionnel est, par exemple, inférieure à 0,1% en poids par rapport au poids du catalyseur C, de préférence inférieure à 0,01% en poids, et plus préférentiellement inférieure à 0,001 % en poids.

Selon un mode préféré de réalisation de l'invention, les composés **A** et **B** mis en œuvre sont choisis parmi les organopolysiloxanes tels que définis ci-dessus. Dans ce cas, un réseau en trois dimensions se forme, ce qui conduit au durcissement de la composition. La réticulation implique un changement physique progressif du milieu constituant la composition. Par conséquent, le procédé selon l'invention peut être utilisé pour obtenir des élastomères, des gels, des mousses etc. On obtient dans ce cas, un matériau silicone réticulé **Y.** On entend par « matériau silicone réticulé » tout produit à base de silicone obtenu par réticulation et/ou durcissement de compositions comprenant des organopolysiloxanes possédant au moins deux liaisons insaturées et des organopolysiloxanes possédant au moins trois motifs hydrogénosilylés. Le matériau silicone réticulé **Y** peut par exemple être un élastomère, un gel ou une mousse.

Toujours selon ce mode préféré de réalisation du procédé selon l'invention, où les composés **A** et **B** sont choisis parmi les organopolysiloxanes tels que définis ci-dessus, on peut mettre en œuvre des additifs fonctionnels habituels dans les compositions silicones. Comme familles d'additifs fonctionnels usuels, on peut citer :

- les charges ;
- les promoteurs d'adhérence ;
- les inhibiteurs ou retardateurs de la réaction d'hydrosilylation ;
- les modulateurs d'adhérence ;
- les résines silicones ;
- les additifs pour augmenter la consistance ;
- les pigments ; et
- les additifs de tenue thermique, de tenue aux huiles ou de tenue au feu, par exemple les oxydes métalliques.

**Les charges** éventuellement prévues sont de préférence minérales. Elles peuvent être notamment siliceuses. S'agissant des matières siliceuses, elles peuvent jouer le rôle de charge renforçante ou semi-renforçante. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 μm (micromètres) et une surface spécifique BET supérieure à 30 $m^2/g$, de préférence comprise entre 30 et 350 m2/g. Les charges siliceuses semi-renforçantes telles que des terres de diatomées ou du quartz broyé, peuvent être également employées. En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium éventuellement traité en surface par des acides gras, l'oxyde de zinc, le mica, le talc, l'oxyde de fer, le sulfate de baryum et la chaux éteinte. Ces charges ont une granulométrie généralement comprise entre 0,001 et 300 μm (micromètres) et une surface BET inférieure à 100 $m^2/g$. De façon pratique mais non limitative, les charges employées peuvent être un mélange de quartz et de silice. Les charges peuvent être traitées par tout produit

approprié. Sur le plan pondéral, on préfère mettre en œuvre une quantité de charge comprise entre 1% et 50% en poids, de préférence entre 1% et 40% en poids par rapport à l'ensemble des constituants de la composition.

**Les promoteurs d'adhésion** sont largement utilisés dans les compositions silicones. Avantageusement, dans le procédé selon l'invention on peut mettre en œuvre un ou plusieurs promoteurs d'adhésion choisis parmi le groupe constitué par:

- les organosilanes alcoxylés contenant, par molécule, au moins un groupe alcényle en $C_2$-$C_6$, sélectionnés parmi les produits de formule générale suivante:

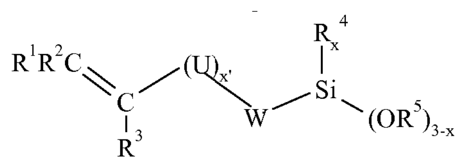

(D.1)

formule dans laquelle :

- $R^1$, $R^2$, $R^3$ sont des radicaux hydrogénés ou hydrocarbonés identiques ou différents entre eux et représentent un atome d'hydrogène, un alkyle linéaire ou ramifié en $C_1$-$C_4$ ou un phényle éventuellement substitué par au moins un alkyle en $C_1$-$C_3$,
- U est un alkylène linéaire ou ramifié en $C_1$-$C_4$,
- W est un lien valentiel,
- $R^4$ et $R^5$ sont des radicaux identiques ou différents et représentent un alkyle en $C_1$-$C_4$ linéaire ou ramifié,
- x' = 0 ou 1, et
- x = 0 à 2.

- les composés organosiliciés comprenant au moins un radical époxy, choisis parmi :

a) les produits (D.2a) répondant à la formule générale suivante :

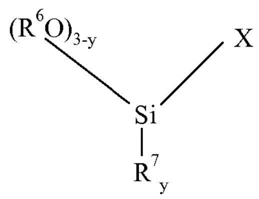

(D.2a)

formule dans laquelle :

- $R^6$ est un radical alkyle linéaire ou ramifié en $C_1$-$C_4$,
- $R^7$ est un radical alkyle linéaire ou ramifié en $C_1$-$C_4$,
- y est égal à 0, 1, 2 ou 3, et
- X étant défini par la formule suivante :

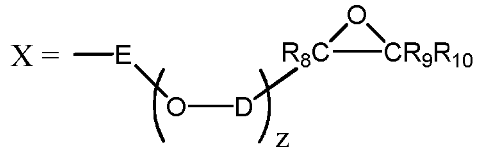

avec :

- E et D qui sont des radicaux identiques ou différents choisis parmi les alkyles en $C_1$-$C_4$ linéaires ou ramifiés,

- z qui est égal à 0 ou 1,
- $R^8$, $R^9$, $R^{10}$ qui sont des radicaux identiques ou différents représentant un atome d'hydrogène ou un alkyle linéaire ou ramifié en $C_1$-$C_4$, et
- $R^8$ et $R^9$ ou $R^{10}$ pouvant alternativement constituer ensemble et avec les deux carbones porteurs de l'époxy, un cycle alkyle ayant de 5 à 7 chaînons, ou

b) les produits (D.2b) constitués par des polydiorganosiloxanes époxyfonctionnels comportant :

(i) au moins un motif siloxyle de formule (D.2 bi) :

$$X_p G_q SiO_{\frac{4-(p+q)}{2}}$$

(D.2 bi)

formule dans laquelle :

- X est le radical tel que défini ci-dessus pour la formule (D.2 a)
- G est un groupe hydrocarboné monovalent choisi parmi les groupes alkyles ayant de 1 à 8 atomes de carbone inclus, éventuellement substitués par au moins un atome d'halogène, et ainsi que parmi les groupes aryles contenant entre 6 et 12 atomes de carbone,
- p = 1 ou 2,
- q = 0, 1 ou 2,
- p + q = 1, 2 ou3 et

et (ii) éventuellement au moins un motif siloxyle de formule (D.2 bii) :

$$G_r SiO_{\frac{4-r}{2}}$$

(D.2 bii)

formule dans laquelle :

- G a la même signification que ci-dessus et
- r est égal à 0, 1, 2 ou 3.

- les composés organosiliciés comprenant au moins une fonction hydrogénosilyle et au moins un radical époxy et
- les chélates de métal M et/ou les alcoxydes métalliques de formule générale :
  $M(OJ)_n$, dans laquelle
  M est choisi dans le groupe formé par : Ti, Zr, Ge, Li, Mn, Fe, Al et Mg ou leurs mélanges n = valence de M et J = alkyle linéaire ou ramifié en $C_1$-$C_8$,.
  De préférence M est choisi dans la liste suivante : Ti, Zr, Ge, Li ou Mn, et encore plus préférentiellement le métal M est le Titane. On peut lui associer, par exemple, un radical alkoxy de type butoxy.

**Les résines silicone** sont des oligomères ou polymères organopolysiloxanes ramifiés bien connus et disponibles dans le commerce. Elles présentent, dans leur structure, au moins deux motifs différents choisis parmi ceux de formule $R_3SiO_{1/2}$ (motif M), $R_2SiO_{2/2}$ (motif D), $RSiO_{3/2}$(motif T) et $SiO_{4/2}$ (motif Q), l'un au moins de ces motifs étant un motif T ou Q.

Les radicaux R sont identiques ou différents et sont choisis parmi les radicaux alkyles linéaires ou ramifiés en C1 - C6, hydroxyle, phényle, trifluoro-3,3,3 propyle. On peut citer par exemple comme radicaux alkyles, les radicaux méthyle, éthyle, isopropyle, tertiobutyle et n-hexyle.

Comme exemples d'oligomères ou de polymères organopolysiloxanes ramifiés, on peut citer les résines MQ, les résines MDQ, les résines TD et les résines MDT, les fonctions hydroxyles pouvant être portées par les motifs M, D et/ou T. Comme exemple de résines qui conviennent particulièrement bien, on peut citer les résines MDQ hydroxylées ayant une teneur pondérale en groupe hydroxyle comprise entre 0,2 et 10 % en poids.

## Utilisation comme catalyseur

L'invention concerne également l'utilisation d'un composé C de formule (1), (2) ou (3) tel que défini ci-dessus comme catalyseur d'hydrosilylation et/ou de silylation déshydrogénante entre un composé insaturé A et un composé B comprenant au moins une fonction hydrogénosilyle tels que définis ci-dessus.

Selon un mode de réalisation lorsque les composés A et B sont des organopolysiloxanes tels que définis ci-dessus, l'invention a également pour objet l'utilisation du composé C de formule (1), (2) ou (3) tel que défini ci-dessus, comme catalyseur de réticulation de compositions silicones.

## Composition

La présente invention a également pour objet, une composition X comprenant :

- au moins un composé insaturé A choisi parmi les composés organopolysiloxanes comportant des motifs de formule (I) :

  $$Z_gU_hSiO_{(4-(g+h))/2} \qquad (I)$$

  dans laquelle :

  - les radicaux Z, identiques ou différents, représentent un radical alcényle ou alcynyle, linéaire ou ramifié, ayant de 2 à 6 atomes de carbone ;
  - les radicaux U, identiques ou différents, représentent un radical hydrocarboné ayant de 1 à 12 atomes de carbone,
  - g = 1 ou 2, h = 0, 1 ou 2 et g+h =1, 2 ou 3 ;

  et comportant éventuellement d'autres motifs de formule (II) :

  $$U_iSiO_{(4-i)/2} \qquad (II)$$

  dans laquelle U a la même signification que ci-dessus, et i =0,1, 2, ou 3,

  - au moins un composé B comprenant au moins une fonction hydrogénosilyle tel que défini ci-dessus et
  - un composé C de formule (1), (2) ou (3) tel que défini ci-dessus.

Selon un autre mode de réalisation de l'invention, la composition X est une composition réticulable comprenant :

- au moins un composé insaturé **A** comportant, par molécule, au moins deux radicaux alcényles en $C_2$-$C_6$ liés à des atomes de silicium et choisi parmi les composés organopolysiloxanes comportant des motifs de formule (I) :

  $$Z_gU_hSiO_{(4-(g+h))/2} \qquad (I)$$

  dans laquelle :

  - les radicaux Z, identiques ou différents, représentent un radical alcényle, linéaire ou ramifié, ayant de 2 à 6 atomes de carbone ;
  - les radicaux U, identiques ou différents, représentent un radical hydrocarboné ayant de 1 à 12 atomes de carbone,
  - g = 1 ou 2, h = 0, 1 ou 2 et g+h =1, 2 ou 3 ;

  et comportant éventuellement d'autres motifs de formule (II) :

  $$U_iSiO_{(4-i)/2} \qquad (II)$$

  dans laquelle U a la même signification que ci-dessus, et i =0,1, 2, ou 3,

  - au moins un composé organohydrogénopolysiloxane **B** comportant, par molécule, au moins deux atomes d'hydrogène, de préférence au moins trois, liés à un atome de silicium identique ou différent, et

- au moins un composé **C** tel que défini ci-dessus.

Selon un mode préféré de réalisation de l'invention, la composition **X** selon l'invention est une composition réticulable, dans laquelle le composé **B** est choisi parmi les organopolysiloxanes comprenant au moins un motif de formule (III) :

$$H_dU_eSiO_{(4-(d+e))/2} \qquad \text{(III)}$$

dans laquelle :

- les radicaux U, identiques ou différents, représentent un radical hydrocarboné ayant de 1 à 12 atomes de carbone,
- d =1 ou 2, e =0, 1 ou 2 et d+e =1, 2 ou 3 ;

et éventuellement d'autres motifs de formule (IV) :

$$U_fSiO_{(4-f)/2} \qquad \text{(IV)}$$

dans laquelle U a la même signification que ci-dessus, et f =0,1, 2, ou 3.

Le composé **C** peut notamment être présent dans la composition **X** selon l'invention en une teneur allant de 0,01% à 15%, de préférence de 0,05% à 10%, par exemple de 0,1% à 4% par nombre de moles de radicaux alcényles en $C_2$-$C_6$ liés à des atomes de silicium du composé organopolysiloxane **A.**

La composition **X** selon l'invention est de préférence exempte de catalyseur à base de platine, de palladium, de ruthénium ou de rhodium. Par « exempte » de catalyseur autre que le catalyseur **C,** on entend que la composition **X** selon l'invention comprend moins de 0,1% en poids de catalyseur autre que le catalyseur **C,** de préférence moins de 0,01% en poids, et plus préférentiellement moins de 0,001% en poids, par rapport au poids total de la composition.

Selon un mode particulier de réalisation, la composition **X** selon l'invention comprend également un ou plusieurs additifs fonctionnels habituels dans les compositions silicones. Comme familles d'additifs fonctionnels usuels, on peut citer :

- les charges ;
- les promoteurs d'adhérence ;
- les inhibiteurs ou retardateurs de la réaction d'hydrosilylation ;
- les modulateurs d'adhérence ;
- les résines silicones ;
- les additifs pour augmenter la consistance ;
- les pigments ; et
- les additifs de tenue thermique, de tenue aux huiles ou de tenue au feu, par exemple les oxydes métalliques.

Les compositions **X** selon l'invention peuvent notamment être obtenues en introduisant sous atmosphère inerte en premier lieu le composé **C** dans le milieu réactionnel, puis en ajoutant le composé **A** sous agitation. Enfin, le composé **B** est introduit et la température du mélange est augmentée pour atteindre la température de réaction.

L'invention a également pour objet un matériau silicone réticulé **Y** obtenu par chauffage à une température allant de 15°C et 150°C, préférentiellement entre 20°C et 130°C, plus préférentiellement encore entre 40°C et 110°C, d'une composition **X** réticulable comprenant :

- au moins un composé insaturé **A** comportant, par molécule, au moins deux radicaux alcényles en $C_2$-$C_6$ liés à des atomes de silicium et choisi parmi les composés organopolysiloxanes comportant des motifs de formule (I) :

  $$Z_gU_hSiO_{(4-(g+h))/2} \qquad \text{(I)}$$

  dans laquelle :

  - les radicaux Z, identiques ou différents, représentent un radical alcényle ou alcynyle, linéaire ou ramifié, ayant de 2 à 6 atomes de carbone ;
  - les radicaux U, identiques ou différents, représentent un radical hydrocarboné ayant de 1 à 12 atomes de carbone,
  - g = 1 ou2,h=0, 1 ou 2 et g+h =1, 2 ou 3;

et comportant éventuellement d'autres motifs de formule (II) :

$$U_iSiO_{(4-i)/2} \quad (II)$$

dans laquelle U a la même signification que ci-dessus, et i =0,1, 2, ou 3,

- au moins un composé organohydrogénopolysiloxane **B** comportant, par molécule, au moins deux atomes d'hydrogène liés à un atome de silicium identique ou différent, et
- au moins un composé **C** tel que défini ci-dessus.

La présente invention est illustrée plus en détails dans les exemples de réalisation non limitatifs.

EXEMPLES

Réactifs

a)

**A-1** divinyltétraméthylsiloxane (DVTMS) avec 1,073 mole de radicaux vinyles liés au silicium pour 100 g de dvtms.
**A-2** vinylpentamethyldisiloxane (VPDMS) avec 0,573 mole de radicaux vinyles liés au silicium pour 100 g de vpdms.
**A-3** organopolysiloxane V100 à extrémité diméthylvinylsilyles avec environ 0,04 mole de radicaux vinyles liés au silicium pour 100 g de V100.

b)

**B-1** Organohydrogénopolysiloxane de formule MD'M avec M: $(CH_3)_3SiO_{1/2;}$ et D':

$(CH_3)HSiO_{2/2}$.

**B-2** Organohydrogénopolysiloxane de formule $MD'_{50}M$ avec M: $(CH_3)_3SiO_{1/2;}$ et D': $(CH_3)HSiO_{2/2}$. Cela correspond à 1,58 mole de Si-H pour 100 g d' organohydrogénopolysiloxane.

c) **C-1** Bis(triméthylsilyl)amidure de fer de formule $Fe(N(SiMe_3)_2)_2$ synthétisé selon le mode opératoire décrit par Andersen, R. A.; Faegri, K.; Green, J. C.; Haaland, A.; Lappert, M. F.; Leung, W. P.; Rypdal, K. Inorg. Chem. 1988, 27 (10), 1782-1786.

**Exemple 1/ Hydrosilylation du divinyltetramethyldisiloxane (DVTMS, A-1) par le MD'M (B-1)**

Mode opératoire

Les essais ont été réalisés en atmosphère inerte. Pour l'ensemble des essais, le catalyseur est pesé et introduit dans un flacon de verre sous atmosphère inerte en boîte à gants. On ajoute ensuite toujours sous atmosphère inerte le DVTMS (A-1) puis le composé comprenant une liaison hydrogénosilyle (MD'M) (2 mol% de catalyseur, SiH : SiVi = 1 : 1). Du dodécane est également ajouté en tant qu'étalon interne.
La concentration molaire en catalyseur est calculée par rapport au nombre de moles total d'insaturations portées par le composé insaturé **A.**
Le flacon est placé sous agitation dans un bain d'huile qui sera chauffé à 90°C.
Le milieu réactionnel est analysé par chromatographie en phase gaz (CPG).
Les sélectivités en produits de réaction sont exprimées en % aire par rapport à l'aire totale des produits formés déterminés par GPC et GPC-MS.
Les résultats de conversion et de sélectivité de l'hydrosilylation du DVTMS sont présentés dans les tableaux 1 et 2.

Tableau 1 : Conversion du DVTMS et de MD'M à 48h

| | Conversion 48h |
|---|---|
| MD'M | 41% |
| DVTMS | 92% |

Tableau 2 : Sélectivité de la réaction à 48h

| | Sélectivité à 48h |
|---|---|
| Hydrogénation DVTMS | 2% |
| Réarrangement MD'M | 0% |
| Hydrosilylation | 36% |
| Silylation Déshydrogénante | 9% |
| Dimérisation DVTMS | 19% |
| Double silylation | 23% |

Ces résultats montrent que le bis(triméthylsilyl)amidure de fer catalyse l'hydrosilylation et la silylation déshydrogénante du DVTMS. Ce catalyseur peut donc être utilisé pour catalyser des réactions d'hydrosilylation et de silylation déshydrogénante lorsque le composé insaturé est un organopolysiloxane.

**Exemple 2/ Hydrosilylation du vinylpentamethyldisiloxane (VPDMS, A-2) par le MD'M (B-1)**

Mode opératoire

Les essais ont lieu de façon identique à l'exemple 1 en remplaçant le DVTMS par le VPDMS (A-2) et avec 0,5 mol% de catalyseur. Les résultats de conversion et de sélectivité de l'hydrosilylation du VPDMS sont présentés dans les tableaux 3 et 4.

Tableau 3 : Conversion du VPDMS et de MD'M à 24h

| | Conversion 24h |
|---|---|
| MD'M | 20% |
| VPDMS | 28% |

Tableau 4 : Sélectivité de la réaction à 24h

| | Sélectivité à 24h |
|---|---|
| Hydrogénation | 4% |
| Réarrangement MD'M | 0% |
| Hydrosilylation | 59% |
| Silylation déshydrogénante | 6% |
| ½ MD'M + HS/DS | 2% |
| Dimérisation VPDMS | 18% |

Ces résultats montrent que le bis(triméthylsilyl)amidure de fer catalyse l'hydrosilylation et la silylation déshydrogénante du VPDMS. Ce catalyseur est assez sélectif pour l'hydrosylilation.

**Exemple 3/ Réticulation de compositions silicones** : **réaction entre le DVTMS (A-1) et l'organopolysiloxane hydrogéné (B-2).**

Mode opératoire :

Le catalyseur est pesé en boîte à gants, dans un pilulier fermé. Puis le DVTMS **A-1** est introduit et le mélange est agité 15 minutes à température ambiante. Ensuite l'organopolysiloxane hydrogéné **B-2** est ajouté, le mélange réactionnel est chauffé à la température souhaitée et l'agitation est maintenue via un barreau magnétique. La concentration molaire en catalyseur est calculée par rapport au nombre de moles total d'insaturations portées par le composé insaturé **A.**
Le début de réticulation est défini comme étant le temps nécessaire pour l'arrêt de l'agitation (TAA) dû à une augmentation de la viscosité du milieu est mesuré.
Les paramètres des différents essais et les résultats de temps d'arrêt d'agitation sont présentés dans le tableau 5.

Tableau 5 : Temps d'arrêt d'agitation (TAA)

| Essai | % catalyseur | Ppm Fe | SiH/SiVi | Température | TAA |
|---|---|---|---|---|---|
| 1 | 0,5% | 1750 | 0,9 | 90°C | TAA=30min |
| 2 | 0,5% | 1200 | 2,0 | 90°C | TAA= 15min |

Ces résultats montrent que le bis(triméthylsilyl)amidure de fer catalyse la réticulation d'huiles silicones. En augmentant le ratio SiH : SiVi, il est possible d'obtenir un TAA = 15min.

**Exemple 4/ Réticulation de compositions silicones** : **réaction entre l'organopolysiloxane vinylé V100 (A-3) et l'organopolysiloxane hydrogéné (B-2).**

Mode opératoire :

Les essais ont lieu de façon identique à l'exemple 3 en remplaçant le DVTMS par l'organopolysiloxane vinylé **A-3.**
Les paramètres des différents essais et les résultats de temps d'arrêt d'agitation sont présentés dans les tableaux 6 et 7. Différentes températures, différentes concentrations en catalyseur et différents ratio SiH/SiVi ont été testés.

Tableau 6 : Temps d'arrêt d'agitation (TAA) - Variation de la température

| Essai | % catalyseur | Ppm Fe | SiH/SiVi | Température | TAA |
|---|---|---|---|---|---|
| 3 | 7,6% | 1650 | 2,1 | 90°C | TAA=7-8h |
| 4 | 7,9% | 1750 | 2,0 | 110°C | TAA=20h |
| 5 | 7,4% | 1650 | 1.6 | 70°C | 24h<TAA<38h |

Tableau 7 : Temps d'arrêt d'agitation (TAA) - Variation de la quantité de catalyseur et du ratio SiH/SiVi

| Essai | % catalyseur | Ppm Fe | SiH/SiVi | Température | TAA |
|---|---|---|---|---|---|
| 6 | 2% | 450 | 2,0 | 90°C | 10h<TAA<24h |
| 7 | 3,5% | 750 | 2,2 | 90°C | TAA=9-10h |
| 8 | 6,9% | 1500 | 2,3 | 90°C | TAA=7-8h |
| 9 | 9,8% | 2150 | 1,8 | 90°C | TAA=7h |
| 10 | 16% | 3500 | 2,1 | 90°C | TAA=7h |
| 11 | 7,1% | 1500 | 4,0 | 90°C | TAA=4-4h30 |
| 12 | 3,8% | 800 | 4,1 | 90°C | TAA=5-5h30 |

Ces résultats montrent que le bis(triméthylsilyl)amidure de fer catalyse la réticulation d'huiles silicones. Cette

réticulation est effective sur une large gamme de température et avec une quantité variable de catalyseur. En augmentant le ratio SiH/SiVi, il est possible d'obtenir des TAA < 5h. Ce composé est donc un bon catalyseur de réticulation de compositions silicones.

**Exemple 5/ Réticulation de compositions silicones : réaction entre l'organopolysiloxane vinylé V100 (A-3), le DVTMS (A-1) et l'organopolysiloxane hydrogéné (B-2).**

Mode opératoire :

Les essais ont lieu de façon identique à l'exemple 4 en introduisant, en plus de l'organopolysiloxane vinylé V100 (A-3), du DVTMS (A-1). La quantité de DVTMS ajoutée est exprimée en équivalent par rapport à la quantité de catalyseur. Le ratio SiH/SiVi est calculé en tenant compte des instaurations de A-3 et A-1.

Les paramètres des différents essais et les résultats de temps d'arrêt d'agitation sont présentés dans le tableau 8.

Tableau 8 : Temps d'arrêt d'agitation (TAA)

| Essai | % catalyseur | Eq. DVTMS | Ppm Fe | SiH/SiVi | Température | TAA |
|---|---|---|---|---|---|---|
| 13 | 4,96% | 3,7 | 1650 | 1,1 | 90°C | TAA=6h |
| 14 | 3,39% | 8,3 | 1650 | 0,9 | 90°C | TAA=3h |

Ces résultats montrent que le bis(triméthylsilyl)amidure de fer catalyse la réticulation d'un mélange d'huiles silicones. En augmentant la quantité de DVTMS, il est possible de réduire le TAA.

## Revendications

**1.** Procédé pour préparer des produits d'hydrosilylation et/ou de silylation déshydrogénante par réaction entre

- un composé insaturé **A** choisi parmi les composés organopolysiloxanes comportant des motifs de formule (I) :

$$Z_gU_hSiO_{(4-(g+h))/2} \qquad (I)$$

dans laquelle :

- les radicaux Z, identiques ou différents, représentent un radical alcényle ou alcynyle, linéaire ou ramifié, ayant de 2 à 6 atomes de carbone ;
- les radicaux U, identiques ou différents, représentent un radical hydrocarboné ayant de 1 à 12 atomes de carbone,
- g = 1 ou2,h=0, 1 ou 2 et g+h =1, 2 ou 3; et comportant éventuellement d'autres motifs de formule (II) :

$$U_iSiO_{(4-i)/2} \qquad (II)$$

dans laquelle U a la même signification que ci-dessus, et i =0,1, 2, ou 3 ;
- et un composé **B** comprenant au moins une fonction hydrogénosilyle,
- ledit procédé étant **caractérisé par le fait que** la réaction d'hydrosilylation et/ou de silylation déshydrogénante est catalysée par un composé du fer **C** de formule (1) :

$$[Fe(N(SiR_3)_2)_x]_y \qquad (1)$$

dans laquelle :

- les symboles R, identiques ou différents, représentent un atome d'hydrogène ou un radical hydrocarboné ayant de 1 à 12 atomes de carbone, et de préférence les symboles R, identiques ou différents, sont choisis dans le groupe constitué par : l'atome d'hydrogène, les groupes alkyles ayant de 1 à 8 atomes de carbone, les groupes cycloalkyles ayant de 3 à 8 atomes de carbone et les groupes aryles ayant de 6 à 12 atomes

de carbone,
- x=1, 2 ou 3 et
- y=1 ou 2.

**2.** Procédé selon la revendication 1 dans lequel le composé C a pour formule (2):

$$[Fe(N(SiR_3)_2)_2]_y \qquad (2)$$

dans laquelle :

- Fe représente le fer au degré d'oxydation II
- les symboles R, identiques ou différents, représentent un atome d'hydrogène ou un radical hydrocarboné ayant de 1 à 12 atomes de carbone, et de préférence les symboles R, identiques ou différents, sont choisis dans le groupe constitué par : l'atome d'hydrogène, les groupes alkyles ayant de 1 à 8 atomes de carbone, les groupes cycloalkyles ayant de 3 à 8 atomes de carbone et les groupes aryles ayant de 6 à 12 atomes de carbone et
- y=1 ou 2.

**3.** Procédé selon la revendication 1 dans lequel le composé **C** a pour formule (3):

$$[Fe(N(Si(CH_3)_3)_2)_2]_y \qquad (3)$$

dans laquelle :

- Fe représente le fer au degré d'oxydation II et
- y=1 ou 2.

**4.** Procédé selon l'une quelconque des revendications dans lequel la concentration molaire en composé **C** est de 0,01% à 15%, de préférence de 0,05% à 10%, par exemple de 0,1% à 4% par rapport au nombre de moles total d'insaturations portées par le composé insaturé **A.**

**5.** Procédé selon l'une des revendications précédentes **caractérisé en ce qu'**il ne met pas en œuvre de composés à base de platine, palladium, ruthénium ou rhodium.

**6.** Procédé selon l'une des revendications précédentes **caractérisé en ce que** le composé **B** comprenant au moins une fonction hydrogénosilyle est choisi parmi le groupe constitué par:

- un composé silane ou polysilane comprenant au moins un atome d'hydrogène lié à un atome de silicium,
- un composé organopolysiloxane comprenant au moins un atome d'hydrogène lié à un atome de silicium, de préférence un composé organopolysiloxane comprenant par molécule au moins deux fonctions hydrogénosilyle, et
- un polymère organique comprenant des fonctions hydrogénosilyles en positions terminales.

**7.** Procédé selon l'une des revendications précédentes dans lequel le composé **B** est un organopolysiloxane comprenant au moins un motif de formule (III) :

$$H_dU_eSiO_{(4-(d+e))/2} \qquad (III)$$

dans laquelle :

- les radicaux U, identiques ou différents, représentent un radical hydrocarboné ayant de 1 à 12 atomes de carbone,
- d =1 ou 2, e =0, 1 ou 2 et d+e =1, 2 ou 3 ;

et éventuellement d'autres motifs de formule (IV) :

$$U_fSiO_{(4-f)/2} \qquad (IV)$$

dans laquelle U a la même signification que ci-dessus, et f =0,1, 2, ou 3.

**8.** Utilisation d'un composé **C** tel que défini dans les revendications 1 à 3 comme catalyseur d'hydrosilylation et/ou de silylation déshydrogénante entre un composé insaturé **A** choisi parmi les composés organopolysiloxanes comprenant au moins une fonction alcène et/ou au moins une fonction alcyne et un composé **B** comprenant au moins une fonction hydrogénosilyle.

**9.** Composition **X** comprenant :

- au moins un composé insaturé **A** choisi parmi les composés organopolysiloxanes comportant des motifs de formule (I) :

$$Z_gU_hSiO_{(4-(g+h))/2} \qquad (I)$$

dans laquelle :

- les radicaux Z, identiques ou différents, représentent un radical alcényle ou alcynyle, linéaire ou ramifié, ayant de 2 à 6 atomes de carbone ;
- les radicaux U, identiques ou différents, représentent un radical hydrocarboné ayant de 1 à 12 atomes de carbone,
- g = 1 ou2,h=0, 1 ou 2 et g+h =1, 2 ou 3;

et comportant éventuellement d'autres motifs de formule (II) :

$$U_iSiO_{(4-i)/2} \qquad (II)$$

dans laquelle U a la même signification que ci-dessus, et i =0,1, 2, ou 3,

- au moins un composé **B** comprenant au moins une fonction hydrogénosilyle et
- un composé **C** tel que défini dans les revendications 1 à 3.

**10.** Composition **X** réticulable selon la revendication 9 comprenant :

- au moins un composé organopolysiloxane **A** comportant, par molécule, au moins deux radicaux alcényles en $C_2$-$C_6$ liés à des atomes de silicium,
- au moins un composé organohydrogénopolysiloxane **B** comportant, par molécule, au moins deux atomes d'hydrogène, de préférence au moins trois, liés à un atome de silicium identique ou différent,
- au moins un composé **C** tel que défini dans les revendications 1 à 3.

**11.** Composition **X** réticulable selon la revendication 10 dans laquelle le composé **B** est choisi parmi les organopolysiloxanes comprenant au moins un motif de formule (III) :

$$H_dU_eSiO_{(4-(d+e))/2} \qquad (III)$$

dans laquelle :

- les radicaux U, identiques ou différents, représentent un radical hydrocarboné ayant de 1 à 12 atomes de carbone,
- d =1 ou 2, e =0, 1 ou 2 et d+e =1, 2 ou 3 ;

et éventuellement d'autres motifs de formule (IV) :

$$U_fSiO_{(4-f)/2} \qquad (IV)$$

dans laquelle U a la même signification que ci-dessus, et f =0,1, 2, ou 3.

**12.** Matériau silicone réticulé **Y** obtenu par chauffage à une température allant de 15 à 150°C, de préférence de 20 à 130°C, et plus préférentiellement de 40 à 110°C, d'une composition **X** réticulable selon la revendication 10 ou 11.

## Patentansprüche

1. Verfahren zur Herstellung von Hydrosilylierungs- und/oder Dehydrierungs-Silylierungsprodukten durch Reaktion zwischen

   - eine ungesättigte Verbindung **A,** ausgewählt aus Organopolysiloxanverbindungen mit Einheiten der Formel (I):

   $$Z_gU_hSiO_{(4-(g+h))/2} \qquad (I)$$

   wobei:

   - die Reste Z, gleich oder verschieden sind und einen linearen oder verzweigten Alkenyl- oder Alkinylrest mit 2 bis 6 C-Atomen darstellen;
   - die Reste U, die gleich oder verschieden sind und einen Kohlenwasserstoffrest mit 1 bis 12 Kohlenstoffatomen darstellen,
   - g = 1 oder 2, h = 0, 1 oder 2 und g+h =1, 2 oder 3 ;

   und gegebenenfalls andere Einheiten der Formel (II) umfassen:

   $$U_iSiO_{(4-i)/2} \qquad (II)$$

   wobei U die gleiche Bedeutung wie oben hat und i =0, 1, 2 oder 3 ist;

   - und eine Verbindung **B,** die mindestens eine Wasserstoffsilylfunktion enthält,
   - wobei das Verfahren **dadurch gekennzeichnet ist, dass** die Hydrosilylierungs- und/oder dehydrierende Silylierungsreaktion durch eine **Eisen-C-Verbindung** der Formel (1) katalysiert wird:

   $$Fe(N(SiR_3)_2)_x]_y \qquad (1)$$

   wobei:

   - die Symbole R gleich oder verschieden sind und ein Wasserstoffatom oder einen Kohlenwasserstoffrest mit 1 bis 12 Kohlenstoffatomen darstellen, und vorzugsweise die Symbole R, die gleich oder verschieden sein können, ausgewählt sind aus der Gruppe bestehend aus: dem Wasserstoffatom, Alkylgruppen mit 1 bis 8 Kohlenstoffatomen, Cycloalkylgruppen mit 3 bis 8 Kohlenstoffatomen und Arylgruppen mit 6 bis 12 Kohlenstoffatomen,
   - x=1, 2 oder 3 und
   - y=1 oder 2 ist.

2. Verfahren nach Anspruch 1, wobei Verbindung **C** die Formel (2) hat:

   $$Fe(N(SiR_3)_2)_2]_y \qquad (2)$$

   wobei:

   - Fe steht für Eisen in der Oxidationsstufe II
   - die Symbole R gleich oder verschieden sind und ein Wasserstoffatom oder einen Kohlenwasserstoffrest mit 1 bis 12 Kohlenstoffatomen darstellen, und vorzugsweise die Symbole R, die gleich oder verschieden sein können, ausgewählt sind aus der Gruppe bestehend aus: dem Wasserstoffatom, Alkylgruppen mit 1 bis 8 Kohlenstoffatomen, Cycloalkylgruppen mit 3 bis 8 Kohlenstoffatomen und Arylgruppen mit 6 bis 12 Kohlenstoffatomen und
   - y=1 oder 2 ist.

3. Verfahren nach Anspruch 1, wobei Verbindung **C** die Formel (3) hat:

   $$Fe(N(Si(CH_3)_3)_2)_2]_y \qquad (3)$$

   wobei:

- Fe für Eisen in der Oxidationsstufe II und
- y=1 oder 2 steht.

**4.** Verfahren nach einem der Ansprüche, wobei die molare Konzentration der Verbindung **C** von 0,01 % bis 15 %, vorzugsweise von 0,05 % bis 10 %, beispielsweise von 0,1 % bis 4 %, bezogen auf die Gesamtmolzahl der von der ungesättigten Verbindung **A** getragenen Ungesättigtheiten, beträgt.

**5.** Verfahren nach einem der vorhergehenden Ansprüche, **dadurch gekennzeichnet, dass** es keine Verbindungen auf Basis von Platin, Palladium, Ruthenium oder Rhodium verwendet.

**6.** Verfahren nach einem der vorhergehenden Ansprüche, **dadurch gekennzeichnet, daß** die Verbindung **B,** die mindestens eine Wasserstoffsilylfunktion enthält, ausgewählt ist aus der Gruppe bestehend aus:

- eine Silan- oder Polysilanverbindung, die mindestens ein an ein Siliciumatom gebundenes Wasserstoffatom enthält,
- eine Organopolysiloxanverbindung mit mindestens einem an ein Siliciumatom gebundenen Wasserstoffatom, vorzugsweise eine Organopolysiloxanverbindung mit mindestens zwei Wasserstoffsilylfunktionen pro Molekül, und
- ein organisches Polymer, das endständige Wasserstoffsilylfunktionen enthält.

**7.** Verfahren nach einem der vorhergehenden Ansprüche, bei dem die Verbindung **B ein** Organopolysiloxan ist, das mindestens eine Einheit der Formel (III) enthält:

$$H_dU_eSiO_{(4-(d+e))/2} \qquad (III)$$

wobei:

- die Reste U gleich oder verschieden sind und einen Kohlenwasserstoffrest mit 1 bis 12 Kohlenstoffatomen darstellen,
- d =1 oder 2, e =0, 1 oder 2 und d+e =1, 2 oder 3 ;

und gegebenenfalls andere Einheiten der Formel (IV):

$$U_fSiO_{(4-f)/2} \qquad (IV)$$

wobei U die gleiche Bedeutung wie oben hat und f =0, 1, 2 oder 3.

**8.** Verwendung einer Verbindung **C,** wie sie in den Ansprüchen 1 bis 3 definiert ist, als Katalysator für die Hydrosilylierung und/oder dehydrierende Silylierung zwischen einer ungesättigten Verbindung **A,** die unter den Organopolysiloxanverbindungen ausgewählt ist, die mindestens eine funktionelle Alkengruppe und/oder mindestens eine funktionelle Alkingruppe umfassen, und einer Verbindung **B,** die mindestens eine funktionelle Wasserstoff-Silylgruppe umfasst

**9.** Zusammensetzung **X** bestehend aus :

- mindestens einer ungesättigte Verbindung **A,** ausgewählt unter den Organopolysiloxanverbindungen mit Einheiten der Formel (I) :

$$Z_gU_hSiO_{(4-(g+h))/2} \qquad (I)$$

wobei:

- die Reste Z gleich oder verschieden sind und einen linearen oder verzweigten Alkenyl- oder Alkinylrest mit 2 bis 6 Kohlenstoffatomen darstellen;
- die Reste U gleich oder verschieden sind und einen Kohlenwasserstoffrest mit 1 bis 12 Kohlenstoffatomen darstellen,
- g = 1 oder 2, h = 0, 1 oder 2 und g+h =1, 2 oder 3 ist;

und gegebenenfalls anderen Einheiten der Formel (II) umfasst:

$$U_iSiO_{(4-i)/2} \quad (II)$$

wobei U die gleiche Bedeutung wie oben hat, und i =0, 1, 2 oder 3 bedeutet,

- mindestens eine Verbindung **B** mit mindestens einer Wasserstoffsilylfunktion und
- eine Verbindung **C** wie in den Ansprüchen 1 bis 3 definiert.

**10.** Die vernetzbare Zusammensetzung **X** nach Anspruch 9, umfassend:

- mindestens eine Organopolysiloxanverbindung **A,** die pro Molekül mindestens zwei an Siliziumatome gebundene $C_2$-$C_6$-Alkenylreste enthält,
- mindestens eine Organohydrogenpolysiloxanverbindung **B,** die pro Molekül mindestens zwei, vorzugsweise mindestens drei, an ein gleiches oder unterschiedliches Siliziumatom gebundene Wasserstoffatome enthält, und
- mindestens eine Verbindung **C** wie in den Ansprüchen 1 bis 3 definiert.

**11.** Vernetzbare Zusammensetzung **X** nach Anspruch 10, bei der die Verbindung **B** ausgewählt ist aus Organopolysiloxanen, die mindestens eine Einheit der Formel (III) umfassen:

$$H_dU_eSiO_{(4-(d+e))/2} \quad (III)$$

wobei:

- die Reste U gleich oder verschieden sind und einen Kohlenwasserstoffrest mit 1 bis 12 Kohlenstoffatomen darstellen,
- d =1 oder 2, e =0, 1 oder 2 und d+e =1, 2 oder 3 ist;

und gegebenenfalls andere Einheiten der Formel (IV):

$$U_fSiO_{(4-f)/2} \quad (IV)$$

wobei U die gleiche Bedeutung wie oben hat und f =0, 1, 2 oder 3 ist.

**12.** Vernetztes Silikonmaterial **Y,** erhalten durch Erhitzen einer vernetzbaren Zusammensetzung **X** nach Anspruch 10 oder 11 auf eine Temperatur im Bereich von 15 bis 150°C, vorzugsweise von 20 bis 130°C und besonders bevorzugt von 40 bis 110°C.

## Claims

**1.** A method for preparing hydrosilylation and/or dehydrogenative silylation products by reaction between:

- an unsaturated compound **A** selected from the organopolysiloxane compounds comprising units of formula (I):

$$Z_gU_hSiO_{(4-(g+h))/2} \quad (I)$$

wherein:

- the radicals Z, identical or different, represent an alkenyl or alkynyl radical, linear or branched, having 2 to 6 carbon atoms;
- the radicals U, identical or different, represent a hydrocarbon radical having 1 to 12 carbon atoms;
- g = 1 or 2, h = 0, 1 or 2 and g+h =1, 2 or 3;

and possibly comprising other units of formula (II):

$$U_iSiO_{(4-i)/2} \quad (II)$$

wherein U has the same meaning as above and i = 0, 1, 2 or 3;

- and a compound **B** comprising at least one silyl hydride function,
- where said method is **characterized by** the fact that the hydrosilylation and/or dehydrogenative silylation reaction is catalyzed by an iron compound **C** of formula (1):

$$[Fe(N(SiR_3)_2)_x]_y \qquad (1)$$

wherein:

- the symbols R, identical or different, represent a hydrogen atom or a hydrocarbon radical having 1 to 12 carbon atoms, and preferably the symbols R, identical or different, are selected from the group consisting of: hydrogen atom, alkyl groups having 1 to 8 carbon atoms, cycloalkyl groups having 3 to 8 carbon atoms and aryl groups having 6 to 12 carbon atoms;
- x=1, 2 or 3; and
- y=1 or 2.

**2.** The method according to claim 1, wherein the compound **C** has formula (2):

$$[Fe(N(SiR_3)_2)_2]_y \qquad (2)$$

wherein:

- Fe represents iron with oxidation level II;
- the symbols R, identical or different, represent a hydrogen atom or a hydrocarbon radical having 1 to 12 carbon atoms, and preferably the symbols R, identical or different, are selected from the group consisting of: hydrogen atom, alkyl groups having 1 to 8 carbon atoms, cycloalkyl groups having 3 to 8 carbon atoms and aryl groups having 6 to 12 carbon atoms; and
- y=1 or 2.

**3.** The method according to claim 1, wherein the compound **C** has formula (3):

$$[Fe(N(Si(CH_3)_3)_2)_2]_y \qquad (3)$$

wherein:

- Fe represents iron with oxidation level II and
- y=1 or 2.

**4.** The method according to any one of the claims, wherein the molar concentration of compound **C** is from 0.01% to 15%, preferably from 0.05% to 10%, for example from 0.1% to 4% relative to the total number of moles of unsaturations borne by the unsaturated compound **A.**

**5.** The method according to one of the preceding claims **characterized in that** it does not use platinum, palladium, ruthenium or rhodium-based compounds.

**6.** The method according to one of the preceding claims **characterized in that** the compound **B** comprising at least one silyl hydride function is selected from the group consisting of:

- a silane or polysilane compound comprising at least one hydrogen atom bound to a silicon atom;
- an organopolysiloxane compound comprising at least one hydrogen atom bound to a silicon atom, preferably an organopolysiloxane compound comprising at least two silyl hydride functions per molecule; and
- an organic polymer comprising silyl hydride functions in terminal positions.

**7.** The method according to one of the preceding claims wherein the compound **B** is an organopolysiloxane comprising at least one unit of formula (III):

$$H_dU_eSiO_{(4-(d+e))/2} \qquad (III)$$

wherein:

- the radicals U, identical or different, represent a hydrocarbon radical having 1 to 12 carbon atoms;
- d =1 or 2, e =0, 1 or 2 and d+e =1, 2 or 3;

and possibly other units of formula (IV):

$$U_fSiO_{(4-f)/2} \quad \text{(IV)}$$

wherein U has the same meaning as above and f = 0, 1, 2 or 3.

**8.** Use of a compound **C** such as defined in claims 1 to 3 as hydrosilylation and/or dehydrogenative silylation catalyst between an unsaturated compound **A** selected from the organopolysiloxane compounds comprising at least one alkene function and/or at least one alkyne function and a compound **B** comprising at least one silyl hydride function.

**9.** A composition **X** comprising:

- at least one unsaturated compound **A** selected from the organopolysiloxane compounds comprising units of formula (I):

$$Z_gU_hSiO_{(4-(g+h))/2} \quad \text{(I)}$$

wherein:

- the radicals Z, identical or different, represent an alkenyl or alkynyl radical, linear or branched, having 2 to 6 carbon atoms;
- the radicals U, identical or different, represent a hydrocarbon radical having 1 to 12 carbon atoms;
- g = 1 or 2, h = 0, 1 or 2 and g+h =1, 2 or 3;

and possibly comprising other units of formula (II):

$$U_iSiO_{(4-i)/2} \quad \text{(II)}$$

wherein U has the same meaning as above and i = 0, 1, 2 or 3;

- at least one compound **B** comprising at least one silyl hydride function; and
- a compound **C** such as defined in claims 1 to 3.

**10.** Cross-linkable composition **X** according to claim 9 comprising:

- at least one organopolysiloxane compound **A** comprising, per molecule, at least two $C_2$-$C_6$ alkenyl radicals bound to silicon atoms;
- at least one organohydrogenpolysiloxane compound **B** comprising, per molecule, at least two hydrogen atoms, preferably at least three, bound to an identical or different silicon atom; and
- at least one compound **C** such as defined in claims 1 to 3.

**11.** Cross-linkable composition X according to claim 10 wherein the compound B is selected from the organopolysiloxanes comprising at least one unit of formula (III):

$$H_dU_eSiO_{(4-(d+e))/2} \quad \text{(III)}$$

wherein:

- the radicals U, identical or different, represent a hydrocarbon radical having 1 to 12 carbon atoms;
- d =1 or 2, e =0, 1 or 2 and d+e =1, 2 or 3;

and possibly other units of formula (IV):

$$U_fSiO_{(4-f)/2} \quad \text{(IV)}$$

wherein U has the same meaning as above and f = 0, 1, 2 or 3.

**12.** A crosslinked silicone material **Y** obtained by heating at a temperature ranging from 15°C to 150°C, preferably from 20°C to 130°C, still more preferably between 40°C to 110°C, a cross-linkable composition **X** according to claim 10 or 11.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0142258 A
- WO 2012017138 A
- US 20140249311 A1
- US 20090182099 A
- US 20090182091 A


### Littérature non-brevet citée dans la description


- **M. TONDREAU et al.** Iron Catalysts for Selective Anti-Markovnikov Alkene Hydrosilylation Using Tertiary Silanes. *SCIENCE,* 02 Février 2012, vol. 335 (6068), 567-570
- **JIAN YANG.** Efficient Hydrosilylation of Carbonyl Compounds with the Simple Amide Catalyst [Fe(N(SiMe3)2}2]. *ANGEW. CHEM. INT. ED.,* 14 Octobre 2010, vol. 49, 10186-10188
- **ANDERSEN, R. A. ; FAEGRI, K. ; GREEN, J. C. ; HAALAND, A. ; LAPPERT, M. F. ; LEUNG, W. P. ; RYPDAL, K.** *Inorg. Chem.,* 1988, vol. 27 (10), 1782-1786